# EUROPEAN PATENT SPECIFICATION

(11) **EP 0 328 967 B1**
(45) Date of publication and mention of the grant of the patent: **11.01.1995**
(21) Application number: 89101896.2
(22) Date of filing: 03.02.1989
(51) Int. Cl.: C09C 3/08, C09C 1/36, C08K 3/22

(54) **Process for rendering polymer resistant to discoloration in the presence of TiO2 pigments**
Verfahren zur Herstellung von Polymeren, die in Gegenwart von Titandioxidpigmenten farbbeständig sind
Procédé pour rendre des polymères résistant à la décoloration en présence des TiO2 pigments

(30) Priority: 03.02.1988 US 151672
(43) Date of publication of application: 23.08.1989
(73) Proprietor: E.I. DU PONT DE NEMOURS AND COMPANY, Wilmington Delaware 19898 (US)
(72) Inventor: Holtzen, Dwight Alan, Newark Delaware 19702 (US); Reid, Austin Henry, Jr., Newark Delaware 19702 (US)
(74) Representative: Abitz, Walter, Dr.-Ing.

(56) References cited:
- EP-A- 0 054 266
- EP-A- 0 077 967
- EP-A- 0 153 193
- FR-A- 1 131 676
- FR-A- 1 567 606
- FR-A- 2 169 832
- FR-A- 2 395 294
- GB-A- 871 411
- GB-A- 2 054 541

## Description

### Background of the Invention

Inorganic pigments, and especially TiO₂, are often incorporated in various polymers as opacifying agents. Also typically incorporated in such polymers are hindered amine light stabilizers ("HALS"); phenolic antioxidants (e.g., butylated hydroxytoluene, commonly referred to as "BHT", and related materials); flame retardants (e.g., Sb₂O₃); and UV stabilizers.

However, a common problem with the use of such pigments (and especially TiO₂ with such additives) is that the pigments can either promote the reaction of polymer additives with each other or react directly with one or more of the additives. These reactions lead to the formation of chromophores which usually reflect light in the yellow portion of the spectrum and hence produce a "yellowing" of the polymer. The aforementioned discoloration problem is especially apparent in white pigmented olefinic polymers.

While methods exist which somewhat inhibit the foregoing discoloration problem, they are deficient in one or more areas, e.g., they (1) can be expensive and/or complex to apply and/or (2) can cause deterioration of some polymer properties and/or cause processing problems such as difficulty in extruding the films or dispersing pigments in dry blends of the polymers.

The following information is disclosed which may be of interest to this invention:
U. S. Patent 3,545,994 discloses masking the surface of TiO₂ by coating it with various metal oxides.

U. S. Patent 3,904,565 discloses a polymer color inhibitor consisting of a mixture of a fatty acid salt, a polyalkeneglycol ether, and thiobisphenol.

U. S. Patent 3,673,146 discloses the use of triorganophosphites to inhibit polymer discoloration.

U. S. Patent 4,054,522 discloses polymer color inhibitors consisting of esters of phosphorodihalous acids.

U. S. Patent 4,357,170 discloses the use of a mixture of an organophosphate/alkanolamine addition product, and a polyol.

An article entitled "Discoloration of Pigmented Polyolefins by D. A. Holtzen appeared in the April, 1977 issue of Plastics Engineering and discloses the use of zinc stearate to inhibit polymer discoloration.

FR-A-1.567.606 relates to the coating of iron oxide with aliphatic monocarboxylic acids to improve the dispersibility of iron oxide particles in industrial organic coating agents and to reduce their tendency to agglomerate.

EP-A-0 153 193 relates to filler particles, e.g. calcium carbonate particles, which are coated by the application of a C₆ - C₁₀ aliphatic carboxylic acid, such as n-octanoic or n-decanoic acid, in the presence of water and an alcohol. The coated articles may be incorporated into polymers, such as unsaturated polyester resins or polyvinyl chloride, to provide compositions with reduced viscosity and shorter fusion times.

EP-A-0 054 266 relates to various pigments which are treated with phthalic acid and/or phthalic acid anhydride to improve their corrosion protection capability in coating compositions.

Solvik et al., Chemical Abstracts 81(22), 137 652 f, suggest to control yellowing of polyethylene pigmented with TiO₂ by treating the TiO₂ with stearic acid or zinc stearate. However, the results are still not satisfactory.

FR-A-2.169.832 describes the treatment of pigments (TiO₂ not being mentioned) with organic acid, such as maleic acid, to provide new thermoplastics with excellent mechanical properties. There is a pointer that discoloration is improved during molding.

The object of the present invention is to provide a process for rendering TiO₂ pigment-containing polymers resistant to discoloration in the presence of polymer additives, especially after prolonged exposure to light and U.V. light.

### Summary of the Invention

In accordance with this invention there is provided a process for rendering polymer resistant to discoloration in the presence of TiO₂ pigment and one or more additives selected from the group consisting of hindered amine light stabilizers, phenolic antioxidants, flame retardants, and IV stabilizers, characterized in that as said pigment a TiO₂ pigment is used which is coated with about 0.01-6 percent, based on the weight of the TiO₂ pigment, of maleic, malonic, benzoic, fumaric or phthalic acid or mixtures thereof.

It has been found that the TiO₂ pigments treated according to the process of this invention have excellent resistance to polymer yellowing or discoloration and do not appear to degrade important polymer properties or cause problems in the processing of the polymer. The process for producing the pigments of this invention is also inexpensive and can be easily carried out in the pigment manufacturing process or the polymer blending or formulating process.

### Detailed Description of the Invention

The acids which can be used according to the present invention are maleic, malonic, benzoic, fumaric or phthalic acid and mixtures thereof. Preferred is maleic acid.

Generally, the organic acid should be present in an amount of 0.01-6 percent, preferably 0.05-4 percent, and most preferably 0.1-3 percent, based on the weight of the inorganic pigment.

The TiO₂ pigments include rutile and anatase TiO₂ which are preferred. Especially preferred are rutile and anatase titanium dioxide having an average particle size of less than 500 nm (5,000 A) and typically having a particle size of about 100-500 nm (1,000-5,000 A). The titanium dioxide pigments also may contain ingredients added thereto to improve the durability characteristics or other properties of the pigment. Thus, the TiO₂ pigments may contain hydrous oxides such as silica, alumina, tin oxide, lead oxide, chromium oxides, and the like.

Generally, the TiO₂ pigments can be treated by contacting them with one or more of the above-mentioned organic acids. The treatment can be carried out by immersing the pigment in the acid or a solution of the acid; spraying the pigment with the acid or solution of the acid, injecting the acid or solution of the acid into an air or steam pigment micronizer; and/or mixing the pigment and the acid or solution of the acid into the polymer and subjecting such mixture to further processing (such as extruding, milling, kneading, etc.) to attain contacting of the acid and pigment.

Polymers which are suitable for use in this invention include polymers of ethylenically unsaturated monomers; polyolefins such as polyethylene, polypropylene, polybutadiene, etc.; polyvinyls such as polyvinyl chloride, polyvinyl esters, polystyrene; acrylic homopolymers and copolymers; phenolics; alkyds; amino resins; siloxanes; epoxys; nylons; polyurethanes; phenoxys; polysulfanes; polycarbonates; polyesters and chlorinated polyesters; polyethers; acetals, polyimides; polyoxyethylenes, etc. Preferred are olefinic polymers.

A wide variety of conventional additives may be included in the polymer as is necessary, desirable or conventional. Such additives include catalysts, initiators, anti-oxidants (e.g., BHT), blowing agent, ultraviolet light stabilizers (e.g., HALS), organic pigments including tinctorial pigments, plasticizers, leveling agents, flame retardants, anti-cratering additives, and the like.

The following examples illustrate, but do not limit, this invention:

### Examples 1-10

To demonstrate the effectiveness of the invention in suppressing discoloration of polymers pigmented with titanium dioxide and containing additives, measurements of delta b values were made for exhibits exposed to ultraviolet light for specified periods of time. The delta b values were measured by a Hunterlab color difference tester. Delta b represents the difference in color reflectivity of the samples. The exhibits were prepared as follows:
One hundred eighty five grams of "Alathon" 20 polyethylene resin (available from E. I. du Pont de Nemours and Company, Wilmington, Delaware, U.S.A.) were combined on a Bolling two-roll mill with 5.0 grams of either of the two standard titanium dioxide pigments studied. The acid of choice, in the amount of 0.1 gram, was then added to the mill at a 0.01 or 0.1 gram level. Finally, 0.6 gram of "Tinuvin 770" hindered amine light stabilizer and 0.6 gram of butylated hydroxytoluene (BHT) were added to the blend. The mixture was rolled into a sheet, pressed out on a pneumatic press and then placed in a controlled-environment light cabinet. The light cabinet had four type-F15T8/BLB lamps which had a total power input of 170 watts. The lamps emitted light in the ultraviolet spectrum, and the samples were located 25 centimeters from the lamps. Values of delta b were recorded over varying periods of time concluding at 122 hours total elapsed time.

Two standard titanium dioxide pigments were studied. Standard pigment A was a chloride process rutile titanium oxide pigment possessing no inorganic oxide surface treatment. Standard pigment B was a chloride process rutile titanium dioxide pigment possessing an inorganic surface treatment of 3.5% alumina and 1.0% silica.

Table I summarizes the results of the experiments. As stated earlier, standard pigment A is a rutile titanium dioxide pigment possessing no inorganic surface treatment. Such pigments have the greatest propensity to promote discoloration. Standard pigment B possesses an inorganic surface treatment and is somewhat less reactive than standard pigment A. The data given in Table I demonstrate that at the end of 122 hours the reactivity of standard pigment A (as measured by promotion of discoloration) was decreased by 22% by stearic acid, 20% by benzoic acid, 38% by malonic acid, and 72% by maleic acid. For standard pigment B, reactivity decreased by 46% for stearic acid, 60% for benzoic acid, 74% for malonic acid and 81% for maleic acid. The foregoing percentages were calculated directly from the delta b readings. (The experiments with stearic acid are comparative experiments.)

**TABLE I**

| EFFECT OF VARIOUS ACIDS IN INHIBITING POLYMER DISCOLORATION | | | | |
|---|---|---|---|---|
| Example | Delta B Measurements | | | |
| | 18 hrs | 36 hrs | 50 hrs | 122hrs |
| 1*- Untreated Standard A | 18.20 | 33.95 | 38.63 | 40.28 |
| 2*- Standard A + Stearic Acid | 8.32 | 18.97 | 24.64 | 31.01 |
| 3 - Standard A + Benzoic Acid | 8.27 | 17.63 | 23.15 | 31.96 |
| 4 - Standard A + Malonic Acid | 5.50 | 11.29 | 15.71 | 31.96 |
| 5 - Standard A + Maleic Acid | 2.42 | 4.63 | 6.19 | 11.40 |
| 6*- Untreated Standard B | 2.87 | 8.65 | 13.05 | 25.04 |
| 7*- Standard B + Stearic Acid | 0.85 | 2.91 | 5.36 | 13.60 |
| 8 - Standard B + Benzoic Acid | 1.39 | 3.18 | 4.86 | 10.00 |
| 9 - Standard B + Malonic Acid | 0.64 | 2.24 | 3.62 | 6.63 |
| 10 - Standard B + Maleic Acid | 0.45 | 1.27 | 2.45 | 4.81 |

| | | | | |
|---|---|---|---|---|
| * Examples 1, 2, 6 and 7 are Comparative Examples. | | | | |

## Claims

1. Process for rendering polymer resistant to discoloration in the presence of TiO₂ pigment and one or more additives selected from the group consisting of hindered amine light stabilizers, phenolic antioxidants, flame retardants, and UV stabilizers, characterized in that as said pigment a TiO₂ pigment is used which is coated with 0.01-6 percent, base on the weight of the TiO₂ pigment, of maleic, malonic, benzoic, fumaric or phthalic acid or mixtures thereof.

2. The process of claim 1 wherein the acid is maleic.

3. The process of claim 1 wherein the polymer is made from one or more ethylenically unsaturated monomers.

4. The process of claim 1 wherein the polymer is polypropylene or polystyrene.

5. The process of claim 1 wherein the acid is maleic and the polymer is polyethylene or polypropylene.

## Patentansprüche

1. Verfahren zum Farbbeständigmachen von Polymeren in Gegenwart von TiO₂-Pigment und einem oder mehreren Zusatzstoffen, ausgewählt aus der Gruppe bestehend aus gehinderten Aminlichtstabilisatoren, phenolischen Antioxidantien, Flammverzögerungsmitteln und UV-Stabilisatoren, dadurch gekennzeichnet, daß als genanntes Pigment ein TiO₂-Pigment eingesetzt wird, das mit 0,01 - 6%, bezogen auf das Gewicht des TiO₂-Pigments, Maleinsäure, Malonsäure, Benzoesäure, Fumarsäure oder Phthalsäure oder Mischungen von diesen überzogen ist.

2. Verfahren nach Anspruch 1, bei welchem die Säure Maleinsäure ist.

3. Verfahren nach Anspruch 1, bei welchem das Polymere aus einem oder mehreren ethylenisch ungesättigten Monomeren hergestellt worden ist.

4. Verfahren nach Anspruch 1, bei welchem das Polymere Polypropylen oder Polystyrol ist.

5. Verfahren nach Anspruch 1, bei welchem die Säure Maleinsäure und das Polymere Polyethylen oder Polypropylen ist.

## Revendications

1. Procédé pour rendre un polymère résistant à l'altération de couleur en présence d'un pigment au TiO₂ et d'un ou plusieurs additifs choisis dans le groupe formé par les stabilisants à la lumière du type amine à empêchement stérique, les antioxydants phénoliques, les retardateurs d'inflammation et les stabilisants aux UV, caractérisé en ce qu'à titre dudit pigment, on utilise un pigment au TiO₂ qui est revêtu de 0,01 à 6 pour cent, par rapport au poids du pigment au TiO₂, d'acide maléique, malonique, benzoïque, fumarique ou phtalique ou d'un mélange d'entre eux.

2. Le procédé de la revendication 1, dans lequel l'acide est l'acide maléique.

3. Le procédé de la revendication 1, dans lequel le polymère est produit à partir d'un ou plusieurs monomères éthyléniquement insaturés.

4. Le procédé de la revendication 1, dans lequel le polymère est un polypropylène ou un polystyrène.

5. Le procédé de la revendication 1, dans lequel l'acide est l'acide maléique et le polymère est un polyéthylène ou un polypropylène.
